# EUROPÄISCHE PATENTSCHRIFT

(11) **EP 0 873 167 B1**
(45) Veröffentlichungstag und Bekanntmachung des Hinweises auf die Patenterteilung: **11.08.1999**
(21) Anmeldenummer: 96943927.2
(22) Anmeldetag: 12.12.1996
(51) Int. Cl.: B01D 11/04

(54) **MEHRPHASEN-EXTRAKTOR**
MULTIPHASE EXTRACTOR
APPAREIL D'EXTRACTION MULTIPHASE

(30) Priorität: 15.12.1995 RU 95121245
(43) Veröffentlichungstag der Anmeldung: 28.10.1998
(73) Patentinhaber: BAYER AG, 51368 Leverkusen (DE)
(72) Erfinder: KOSTANIAN, Artak Eranosovich, Moskovskaja obl., 142701 (RU)
(86) Internationale Anmeldenummer: EP9605551
(87) Internationale Veröffentlichungsnummer: WO9722393

(56) Entgegenhaltungen:
- EP-A- 0 514 201
- GB-A- 2 190 012
- US-A- 2 721 790
- US-A- 5 041 227
- SOVIET INVENTIONS ILLUSTRATED Section Ch, Week 8240 Derwent Publications Ltd., London, GB; Class J01, AN 82-85292E XP002029205 & SU 886 932 B (TOKAREV N N) , 7.Dezember 1981

## Beschreibung

Die Erfindung geht aus von einem Mehrphasen-Extraktionsapparat mit mindestens zwei Kammern, die in ihrem oberen und unteren Teil durch Verbindungskanäle verbunden, mit Dispergiervorrichtungen ausgestattet sind und Stutzen für die Zuführung und Abführung einer ersten und zweiten dispersen Phase besitzen.

Ein solcher Mehrphasenextraktor kann in chemischen, hydrometallurgischen, mikrobiolischen und anderen Industriezweigen zur Trennung, Extraktion, Konzentrierung und Reinigung von Stoffen angewendet werden.

Apparate zur Durchführung von Prozessen der dreiphasigen flüssigen Extraktion sind bekannt in Form eines Zweikammersystems, wobei die beiden Kammern im oberen Teil miteinander verbunden sind oder eine poröse Trennwand besitzen. Die Kammern sind ausgefüllt mit einer kontinuierlichen Phase, durch welche zwei dispergierende Phasen, die nicht löslich in der kontinuierlichen Phase sind, in Form von Tropfen durchgeleitet werden. Hierbei erfolgt der Übergang von Stoffen aus einer dispergierten Phase (Raffinat-Phase) durch die kontinuierliche Phase (auch Flüssigmembranphase genannt) in die andere dispergierte Phase (Extrakt-Phase). (s. z.B. Journal "Theoretische Grundlagen der chemischen Technologie" 1984, T. 18; Nr. 6, S. 736-738.)

Diese Apparate sind hinsichtlich ihrer Leistungsfähigkeit und der Erweiterung auf vielstufige Prozesse verbesserungsbedürftig.

Vom technischen Standpunkt sowie vom erreichbaren Effekt her kommt der dreiphasige Extraktor, welcher aus einer ersten und zweiten, mit der kontinuierlichen Phase (Flüssig-Membran) gefüllten Kammer besteht, den bekannten Apparaten am nächsten. Die Kammern besitzen Vorrichtungen für die Dispergierung der jeweiligen Phase und sind miteinander durch Überläufe für die Zirkulation der kontinuierlichen Phase verbunden. Die Überlaufe sind in Form von Rohren ausgeführt, welche den oberen und unteren Teil der Kammer jeweils miteinander verbinden. Der Extraktor ist mit Stützen für die Zu- und Abführung der ersten und zweiten dispergierten Phase versehen. (Russische Patentanmeldung Nr. 94-015776/26 (015406) vom 27.04.94)

Die zu dispergierende Phase, welche die Ausgangslösung ist (Raffinat), und das Lösungsmittel (Extrakt-Phase) werden jeweils in der entsprechenden Kammer mittels einer Dispergiervorrichtung in Tröpfchen zerteilt, die sich als Tropfenschwarm durch die kontinuierliche Phase bewegen Auf Grund des Dichteunterschiedes der Emulsion in der ersten und zweiten Kammer erfolgt eine Zirkulation der kontinuierlichen Phase durch die oberen und unteren Überläufe, so daß ein Übergang des zu extrahierenden Stoffes aus einer Kammer in die andere und aus der ersten zu dispergierenden Phase in die zweite erfolgt.

Ein Nachteil des bekannten Dreiphasen-Extraktors liegt darin, daß durch die zirkulierende kontinuierliche Phase Tröpfchen der dispergierenden Phase aus einer Kammer in die andere mitgerissen werden. Diese Erscheinung, die zur Senkung der Effektivität des Apparates und zur Verschmutzung der Extrakt-Phase führt, verstärkt sich insbesondere mit der Erhöhung des Verhältnisses der Mengenströme von Raffinat-Phase und Extrakt-Phase infolge des Ansteigens der Triebkraft der Zirkulation (Unterschied der Dichten der Emulsionen in der ersten und zweiten Kammer).

Bei der Extraktion in Aufkonzentrierung von Stoffen aus verdünnten Lösungen, z.B. Metallen aus Abwässern, kann das Verhältnis der Ströme des Raffinates und Extraktes größer als 50 sein. Die Konstruktion des genannten Extraktors ist im Hinblick auf Prozesse dieser Art verbesserungsbedürftig.

Die Aufgabe der Erfindung besteht in der Erhöhung der Effektivität des Mehrphasen-Extraktors durch eine Reduzierung des Mitreiß-Effektes.

Diese Aufgabe wird, ausgehend von dem eingangs beschriebenen Apparat, erfindungsgemäß dadurch gelöst, daß die Kammern mit Koaleszenz-fördernden Packungen ausgerüstete Separationszonen aufweisen, die im Bereich der Eingangsöffnungen der Verbindungskanale in die Kammern gelegen sind.

Vorzugsweise sind die Verbindungskanale an der Einmündung in die Kammern mit ringförmigen Verteilern versehen, die über Öffnungen mit den Kammern verbunden und zusätzlich mit einer Koaleszenz-fördernden Packung ausgerustet sind.

Vorteilhaft sind auch in den Verbindungskanalen Koaleszenz-fördernden Packungen angeordnet.

Gemäß einer Weiterbildung der Erfindung sind die Verbindungskanäle für die Phasenführung gebogen ausgeführt und mit einem Vorteil zur Einstellung der Umlaufgeschwindigkeit der kontinuierlichen Phase versehen.

Durch die Füllung der Separationszonen mit Füllkörpern in den Eingangsöffnungen der Überläufe wird das Mitreißen von Tröpfchen durch den zirkulierenden Strom der kontinuierlichen Phase aus einer Kammer in die andere auf Grund der Koaleszenz der kleinen Tröpfchen in den Füllkörpern sowie die Verschleppung größerer Tröpfchen in die Arbeitszone der Kammern verhindert.

Durch die Verbindung der Überläufe mit den Kammern durch eine Reihe von Öffnungen, welche am Mantelumfang angebracht sind, wird eine gleichmäßige Geschwindigkeitsverteilung der kontinuierlichen Phase im Querschnitt der Kammern in der Separationszone erreicht, was die Wahrscheinlichkeit des Mitreißens von Tropfen herabsetzt. Dieser Effekt wird ebenfalls durch die separierenden Füllkörper der Überläufe begünstigt. Außerdem wird durch eine gleichmäßige Geschwindigkeitsverteilung der kontinuierlichen Phase über den Querschnitt der Kammern die Effektivität des Massenaustausches des Extraktors erhöht.

Die Ausführung der Überläufe in Form von gekrümmten Rohren erzielt eine zusätzliche Separation kleiner Tröpfchen, welche durch die Separationszonen der Kammern "hindurchschlüpfen". Das Regulier-Ventil an den Überläufen erlaubt die Einstellung von Zirkulationsgeschwindigkeiten bei beliebigen Verhältnissen von Raffinat- und Extraktphase. Dadurch können optimale Strömungsbedingungen eingestellt werden, um die Verschleppung der Tröpfchen zu vermeiden.

Die zusätzliche Anordnung von Kammern analoger Konstruktion unter der ersten und zweiten Kammer erlaubt die Durchführung von mehrstufigen Prozessen der Stofftrennung im Mehrphasen-Extraktor. Die Verbindung der oberen und unteren Kammern durch Überläufe für die kontinuierliche Phase erlaubt der Durchführung von Trennprozessen in Form von Flüssigmembranen, sowie als Mehrphasen-Extraktion.

In Figur 1 bis 3 sind schematisch zwei der Möglichkeiten der Ausführung des vorgestellten Mehrphasen-Extraktors dargestellt
In Figur 1 ist ein einstufiger Extraktor für die Durchführung von Trennprozessen von Stoffen mit ruhender kontinuierlicher Phase dargestellt, die als Flüssigmembran dient.
In Figur 2 ist ein Mehrstufenextraktor dargestellt, welcher sowohl als Flüssigmembranextraktor, wie auch als Mehrphasenextraktor (3-phasig) betrieben werden kann.
In Figur 3 ist das Schnittbild eines einstufigen Extraktors dargestellt.

Der Mehrphasenextraktor besteht aus der ersten 1 und zweiten 2 Kammer, welche mit Dispergierungsvorrichtungen 3 ausgerustet sind. Die Kammern 1 und 2 sind im oberen und unteren Bereich durch Überläufe 4 verbunden. Die Überläufe sind durch Öffnungen 5 mit den Kammern 1 und 2 verbunden, welche an einem am Mantelumfang der Kammern 1/2 angebrachten ringförmigen Verteilerrohr 5a angeordnet sind. In Abhängigkeit der Dichten der kontaktierenden Phasen werden die verbindenden Öffnungen 5 in den Kammern 1 und 2 höher oder niedriger der Phasengrenzfläche angeordnet. In den Kammern 1 und 2 befinden sich die Separationszonen 7, welche an den Eingangsöffnungen 5 der Überläufe 4 (für die zirkulierende kontinuierliche Phase der Kammern) angeordnet sind.

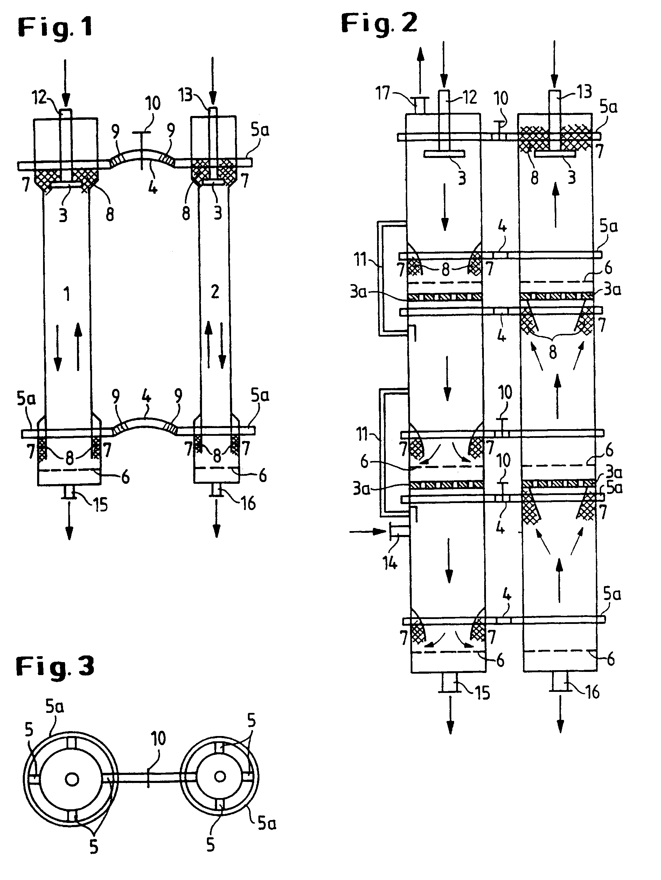

Die Separationszonen 7 sind mit Füllkörpern 8 ausgestattet. Die Überläufe 4 sind ebenfalls mit separierenden Füllkörpern 9 versehen und besitzen ein Ventil 10 für die Regulierung der Zirkulationsgeschwindigkeit der kontinuierlichen Phase. Im einstufigen Extraktor (Figur 1) sind die Überlaufe 4 in Form eines gekrümmten Rohres ausgeführt. Anstelle der Füllkörper 8, 9 können auch Schüttungen, Packungen oder Gestricke zur Förderung der Koaleszenz eingesetzt werden.

Der Mehrstufenextraktor (Figur 2) ist mit zusatzlichen Kammern 1 und 2, welche unter der ersten 1 und zweiten 2 Kammer angebracht sind, versehen. Die oberen und unteren Kammern sind durch Überlaufe 4 für die kontinuierliche Phase 2 miteinander verbunden.

Die Extraktoren sind mit Stutzen 12, 13, 14 für die Zufuhrung und 15, 16, 17 für die Abführung der Phasen ausgestattet.

Der mehrstufige Extraktor arbeitet nach folgenden, Prinzip:

Die 1. und 2. Kammer wird mit der kontinuierlichen Phase gefüllt. Den Kammern 1/2 wird über die Stutzen 8, 9 und die Dispergier-Vorrichtung 3 die erste und zweite zu dispergierende Phase zugeführt. In Abhängigkeit der Dichte der kontaktierenden Flüssigkeiten bewegen sich die Tröpfchen der dispergierten Phase in den Kammern 1 und 2 nach oben oder unten und koaleszieren an der Phasen-. grenzfläche. Im mehrstufigen Apparat wiederholt sich der Vorgang der Dispergierung und Koaleszenz in jeder Stufe. Hierbei wird die Dispergierung der zu Dispensphasen in den Kammern der zweiten und folgenden Stufen (entsprechend der Bewegung der Phasenströme) durch die perforierten Trennwände 3a erzielt. Auf diese Weise stellen die erwähnten perforierten Trennwände 3a die Disperg-Vorrichtung für die Kammern der zweiten und folgenden Stufen dar. Die dispergierten Phasen werden mittels der Stutzen 15, 16 aus dem Extraktor abgeführt.

Bei der Bewegung der Tröpfchenschwärme durch die Kammern 1 und 2 bilden sich Dispersionen mit unterschiedlicher Dichte. Infolgedessen entsteht eine aufsteigende und andererseits absteigende Bewegung der kontinuierlichen Phase. Die Zirkulation zwischen den Kammern 1 und 2 erfolgt durch die Öffnungen 5, welche am Mantelumfang des Verteilerrohrs 5a am Überlauf 4 angebracht sind.

Beim Durchströmen der Füllkörper 8 in den Separationszonen 6 und 7 der Kammern 1 und 2 werden von der kontinuierlichen Phase die durch sie mitgerissenen kleinen Tröpfchen der dispergierten Phase abgetrennt Auf diese Weise wird eine Verringerung der Effektivität des Trennprozesses auf Grund der Vermischung der Ströme der ersten und zweiten dispergierten Phase vermieden.

In einigen Prozessen ist die Bildung von dünnen Emulsionen möglich. In diesem Fall werden die in der Separationszone 7 "durchgeschlüpften" kleinen Tröpfchen in den separierenden Füllkörpern 9 abgetrennt, welche in die gekrümmten Überläufen 4 eingebracht sind (Figur 1). Zur Vermeidung des Mitreißens dieser kleinen Tröpfchen bei größen Zirkulationstriebkräften (bei großen Dichteunterschieden der Dispersionen in der ersten und zweiten Kammer) kann gegebenenfalls die Zirkulationsgeschwindigkeit mit Hilfe des Ventils 10 vermindert werden.

Für eine effektive Tropfenseparation werden die Füllkörper 8 und 9 aus Werkstoffen hergestellt, welche durch die dispergierende Phase benetzt werden. Die Füllkörper können in Form von geordneten oder ungeordneten Packungen ausgeführt sein.

Der Mehrphasen-Extraktor kann verwendet werden als Vorrichtung zur Trennung von Stoffen mittels flüssiger Membranen sowie als Apparat für die Mehrphasen-Extraktion.

Im ersten Fall wird die Ausgangslösung (Raffinat-Phase) in Form einer zu dispergierender Phase in eine der Kammern 1 oder 2 aufgegeben. Der zu extrahierende Stoff wird durch die kontinuierliche Phase durch Bildung einer Komplex- oder anderen Verbindung extrahiert. In der kontinuierlichen Phase befindet sich dann das Übertragungs-Reagenz. Der durch die zirkulierende kontinuierliche Phase extrahierte (welche im genannten Fall als Flüssigmembran dient) Stoff wird in die andere Kammer übertragen, wo die Reextraktion durch die 2. dispergierte Phase (Extrakt-Phase) erfolgt. Hierbei kann die kontinuierliche Phase stehend (Figur 1) oder fließend (Figur 2) sein. Die zu dispergierenden Phasen können im periodischen (zyklischen) Betrieb in wechselnder Reihenfolge (Figur 1) zugeführt werden.

Im zweiten Fall wird die Ausgangslösung, welche mehrere Komponenten enthält, über den Stutzen 14 dem Extraktor zugeführt (Figur 2) und die zu extrahierende Komponente wird durch die dispergierten Phasen in den Kammern 1 und 2 extrahiert. Im mehrstufigen Kolonnenapparat (Figur 2) erfolgt die entgegengesetzte Kontaktierung der kontinuierlichen und dispergierten Phase. Die kontinuierliche Phase strömt von Stufe zu Stufe durch die Verbindungsleitungen 11, welche die oberen und unteren Kammern verbinden und verläßt den Apparat durch den Stutzen 12.

Der aufgeführte mehrphasige Extraktor ermöglicht die effektive Durchführung von Trennprozessen bei unterschiedlichen Verhältnissen von Raffinat und Extrakt. Außerdem besteht bei diesem Apparat die Möglichkeit der Durchführung eines zyklischen Betriebsweise mit aufeinanderfolgendem Kontakt der dispersen und der kontinuierlichen Phase.

## Patentansprüche

1. Dreiphasen-Extraktionsapparat mit mindestens zwei Kammern (1,2), die in ihrem oberen und unteren Teil durch Verbindungskanäle (4) verbunden sind, mit Dispergiervorrichtungen (3) ausgestattet sind und Stutzen (12, 13, 15, 16) für die Zuführung und Abführung einer ersten und zweiten dispersen Phase besitzen, dadurch gekennzeichnet, daß die Kammern (1, 2) mit Koaleszenz-fördernden Packungen (8) ausgerüstete Separationszonen (7) aufweisen, die im Bereich der Eingangsöffnungen der Verbindungskanäle (4) in die Kammern (1, 2) gelegen sind.

2. Apparat nach Anspruch 1, dadurch gekennzeichnet, daß die Verbindungskanäle (4) an der Einmundung in die Kammern (1, 2) mit ringförmigen Verteilern (5a) versehen sind, die über Öffnungen (5) mit den Kammern (1, 2) verbunden sind.

3. Apparat nach Anspruch 1 und 2, dadurch gekennzeichnet, daß auch in den Verbindungskanälen (4) Koaleszenz-fördernde Packungen (9) angeordnet sind.

4. Apparat nach Anspruch 1 bis 3, dadurch gekennzeichnet, daß die Verbindungskanäle (4) für die Phasenführung gebogen ausgeführt sind und mit einer Vorrichtung (10) zur Einstellung der Umlaufgeschwindigkeit der kontinuierlichen Phase versehen sind.

5. Apparat nach Anspruch 1 bis 3, dadurch gekennzeichnet, daß unter der ersten und zweiten Kammer weitere Kammern angeordnet sind, die mit der oberen Kammer durch Leitungen (11) für die kontinuierliche Phase verbunden sind.

## Claims

1. Three-phase extraction apparatus having at least two chambers (1, 2) which are connected in their upper part and lower part by connection channels (4), are equipped with dispersion apparatuses (3) and have ports (12, 13, 15, 16) for the feed and discharge of a first and second disperse phase, characterized in that the chambers (1, 2) have separation zones (7) which are equipped with coalescence-promoting packings (8), which separation zones are situated in the area of the inlet orifices of the connection channels (4) into the chambers (1, 2).

2. Apparatus according to Claim 1, characterized in that the connection channels (4) are provided at the opening into the chambers (1, 2) with annular distributors (5a) which are connected via orifices (5) to the chambers (1, 2).

3. Apparatus according to Claim 1 and 2, characterized in that coalescence-promoting packings (9) are also disposed in the connection channels (4).

4. Apparatus according to Claim 1 to 3, characterized in that the connection channels (4) for the phase transport are constructed so as to be curved and are provided with an apparatus (10) for setting the circulation rate of the continuous phase.

5. Apparatus according to Claim 1 to 3, characterized in that further chambers are disposed below the first and second chambers, which further chambers are connected to the upper chamber by lines (11) for the continuous phase.

## Revendications

1. Appareil d'extraction à trois phases comportant au moins deux chambres (1, 2) qui sont reliées dans leurs parties supérieures et inférieures par des canaux de liaison (4), sont équipées de dispositifs de dispersion (3) et possèdent des tubulures (12, 13, 15, 16) pour l'amenée et l'évacuation d'une première et d'une deuxième phases dispersées, caractérisé en ce que les chambres (1, 2) présentent des zones de séparation (7) pourvues d'empilages favorisant la coalescence (8) qui sont disposés à proximité des orifices d'entrée des canaux de liaison (4) dans les chambres (1, 2).

2. Appareil suivant la revendication 1, caractérisé en ce que les canaux de liaison (4) sont pourvus de distributeurs annulaires (5a) à l'embouchure dans les chambres (1, 2), lesquels sont reliés avec les chambres (1, 2) par l'intermédiaire d'orifices (5).

3. Appareil suivant les revendications 1 et 2, caractérisé en ce que des empilages favorisant la coalescence (9) sont également disposés dans les canaux de liaison (4).

4. Appareil suivant les revendications 1 à 3, caractérisé en ce que les canaux de liaison (4) pour la conduite des phases sont réalisés avec une forme recourbée et sont pourvus d'un dispositif (10) pour le réglage de la vitesse de circulation de la phase continue.

5. Appareil suivant les revendications 1 à 3, caractérisé en ce que d'autres chambres sont disposées en dessous des première et deuxième chambres, lesquelles sont reliées avec la chambre supérieure par des tuyauteries (11) pour la phase continue.
